# EUROPÄISCHE PATENTSCHRIFT

(11) **EP 3 556 585 B1**
(45) Veröffentlichungstag und Bekanntmachung des Hinweises auf die Patenterteilung: **31.03.2021**
(21) Anmeldenummer: 19169597.2
(22) Anmeldetag: 16.04.2019
(51) Int. Cl.: B60H 1/00, B60H 1/24

(54) **DACHSTRUKTUR UND KABINE**
ROOF STRUCTURE AND CABIN
STRUCTURE DE TOIT ET CABINE

(30) Priorität: 20.04.2018 DE 102018206111
(43) Veröffentlichungstag der Anmeldung: 23.10.2019
(73) Patentinhaber: Deere & Company, Moline, IL 61265 (US)
(72) Erfinder: Jha, Pankaj Kumar, 68163 Mannheim (DE); Gardner, Jeffrey, 68163 Mannheim (DE); Dietrich, Gunnar, 68163 Mannheim (DE); Trhlik, Jiri, 68163 Mannheim (DE)
(74) Vertreter: Stein, Stefan

(56) Entgegenhaltungen:
- EP-A1- 0 733 503
- EP-A1- 3 176 058
- JP-B2- 3 579 279
- US-A1- 2004 144 850

## Beschreibung

Die Erfindung betrifft eine Dachstruktur gemäss dem Oberbegriff des unabhängigen Anspruchs 1 und eine Kabine gemäss dem Oberbegriff des unabhängigen Anspruchs 10.

Beim Einsatz eines landwirtschaftlichen Fahrzeugs, beispielsweise einer selbstfahrenden Feldspritze oder eines Traktors mit angehängtem oder angebauten Spritzgerät, kommen beim Spritzen auf dem Feld oftmals chemische Substanzen, insbesondere chemischer Pflanzenschutzmittel wie Pestizide, Herbizide oder Fungizide, zum Einsatz. Dadurch kann die Aussenumgebung, insbesondere auch die Umgebungsluft, mit Verschmutzungen belastet sein, beispielsweise mit Staub, Aerosolen und chemischen Dämpfen und Gasen, insbesondere auch den chemischen Substanzen. Um den Fahrer in der Kabine gegen derartige Verschmutzungen zu schützen, ist es bekannt, die Kabine mit einem Filterelement, beispielsweise einem Filter, zu versehen, welche die aus der Aussenumgebung angesaugte Luft filtert bzw. reinigt und die gefilterte Luft in das Innere der Kabine abgibt. Beispielsweise sieht die Norm EN 15695 zum Schutz des Fahrers von landwirtschaftlichen Fahrzeugen verschiedene Kategorien für Kabinen vor, sodass je nach Kabinenkategorie bestimmte Vorgaben erfüllt werden müssen. Eine Kabine der Kategorie 4 (CAT IV), welche eine Kabine mit hohen Anforderungen an die Luftreinheit beschreibt, muss beispielsweise derart ausgebildet sein, dass Verschmutzungen aus der Aussenumgebung nicht in das Innere der Kabine gelangen dürfen. Darüber hinaus werden landwirtschaftliche Fahrzeuge oft bei für den Fahrer unangenehmen warmen oder kalten Aussentemperaturen eingesetzt, sodass die Luft innerhalb der Kabine nicht nur gefiltert sondern auch klimatisiert werden muss. Aus diesem Grund ist die Kabine auch mit einer Klimaeinrichtung zur Klimatisierung der Luft im Inneren der Kabine versehen, beispielsweise einer Heizung und/oder einer Klimaanlagen-Baugruppe. Die Filtereinrichtung und/oder die Klimaeinrichtung können insbesondere in einer Dachstruktur angeordnet sein.

Im Weiteren ist aus der DE 10 2004 004197 A1 eine zweiteilig ausgebildete Dachstruktur bekannt, welche ein Filterelement und eine Klimaeinrichtung aufweist. Die zweiteilige Dachstruktur umfasst eine untere und obere Dachgruppe, wobei an den peripheren Verbindungsstellen der unteren und oberen Dachbaugruppe, also den der Aussenumgebung zugewandten Verbindungsstellen, ein Dichtmittel vorgesehen ist, beispielsweise ein Dichtmittel, insbesondere ein auf Schaum oder ein auf Kitt basierendes Dichtmittel, um das Eindringen von Verschmutzungen in die Dachstruktur zu verhindern. Derartige zweiteilige Dachstrukturen erfüllen jedoch die Kategorie 4 Anforderungen der EN 15695 nicht, da das Dichtmittel den Innenraum der Dachstruktur und somit auch das Innere der Kabine nicht ausreichend abdichtet. Dadurch können Verschmutzungen aus der Aussenumgebung in die Dachstruktur und/oder in das Innere der Kabine gelangen, was dazu führt, dass der Fahrer den schädlichen Verschmutzungen direkt ausgesetzt ist. Es wurde versucht die obigen Nachteile durch eine Dachstruktur zu lösen, welche aus einer einteiligen Dachstruktur besteht, da aufgrund des einteiligen Aufbaus der Dachstruktur im Wesentlichen auf Dichtmittel verzichtet werden kann. Dieser Lösungsansatz ist allerdings nachteilig, da die Montage der Filter- und Klimaeinrichtung, also das Verlegen von Leitungen, Schläuchen und der elektrischen Verkabelung sowie der Einbau der Klimaanlagen-Baugruppe und Filter, sehr aufwändig ist. Im Weiteren ist die Wartung der Filter- und Klimaeinrichtung, beispielsweise die Reparatur einer Leitung oder der Austausch der Klimaanlagen-Baugruppe oder des Filters, bei einer solchen einteiligen Konstruktion nahezu unmöglich. Somit führen die bekannten Lösungsansätze zu höherem Wartungsaufwand und/oder gefährden die Gesundheit des Fahrers. Die EP 3 176 058 A1 offenbart eine Kabine für ein landwirtschaftliches Fahrzeug, mit einer Dachstruktur und einem Luftführungselement.

Ausgehend von diesem Stand der Technik ist es daher eine Aufgabe der vorliegenden Erfindung eine Dachstruktur und eine Kabine vorzuschlagen, welche die aus dem Stand der Technik bekannten Nachteile vermeidet, insbesondere eine Dachstruktur und eine Kabine vorzuschlagen, die das Eindringen von Verschmutzungen in den Innenraum der Dachstruktur und/oder das Innere der Kabine vermeidet und/oder konstruktiv einfach ausgestaltet und/oder eine zu Wartungszwecken vereinfachten Zugänglichkeit aufweist.

Diese Aufgabe wird durch eine Dachstruktur mit den Merkmalen des Anspruchs 1 und eine Kabine mit den Merkmalen des Anspruchs 10 gelöst.

Die abhängigen Ansprüche beziehen sich auf besonders vorteilhafte Ausführungsformen der Erfindung.

Erfindungsgemäss wird eine Dachstruktur für ein landwirtschaftliches Fahrzeug vorgeschlagen, umfassend eine obere Dachbaugruppe und eine untere Dachbaugruppe, wobei in der unteren Dachbaugruppe eine Klimakammer ausgebildet ist. Die obere Dachbaugruppe ist hierbei zum Umschliessen der Klimakammer an der unteren Dachbaugruppe befestigbar. Im Weiteren umfasst die untere Dachbaugruppe eine Einlasskammer und eine Auslasskammer für klimatisierte Luft, wobei die Einlasskammer und die Auslasskammer zwischen der unteren Dachbaugruppe und der oberen Dachbaugruppe als voneinander getrennte Kammern ausgebildet sind. An der Einlasskammer ist ausserdem eine Zirkulationsöffnung zur Zufuhr von rezirkulierter Luft angeordnet. Die Dachstruktur umfasst ein in der Einlasskammer angeordnetes Luftführungselement, wobei das Luftführungselement derart an der Zirkulationsöffnung und an oder in der Klimakammer angeordnet ist, dass ein gegenüber einer Aussenumgebung abgedichteter Bereich ausgebildet ist.

Das landwirtschaftliche Fahrzeug kann eine landwirtschaftliche Zugmaschine oder Erntemaschine, im Speziellen ein Traktor oder Schlepper oder eine selbstfahrende Feldspritze oder dergleichen sein. Anstatt eines landwirtschaftlichen Fahrzeugs kann die Dachstruktur oder Kabine aber auch für eine Baumaschine sein, beispielsweise einen Bagger oder dergleichen. Das Luftführungselement ist zusätzlich in der Klimakammer angeordnet, also teilweise in der Einlasskammer und teilweise in der Klimakammer. Das Luftführungselement ist als ein geschlossener Kanal oder als ein röhrenförmiger Körper ausgebildet, insbesondere als Rohr. Ausserdem kann das Luftführungselement auch Kammern aufweisen, insbesondere Kammern, welche an die Form der Einlasskammer und/oder Auslasskammer angepasst sind. Die Form und/oder der Querschnitt des Luftführungselements können an die Geometrie der unteren Dachbaugruppe und/oder der oberen Dachbaugruppe, bevorzugt an die Geometrie der Einlasskammer und/oder der Klimakammer und/oder der Frischluftöffnung und der Zirkulationsöffnung angepasst sein. Unter einem abgedichteten Bereich kann im Folgenden ein Bereich innerhalb der Dachstruktur verstanden werden, der gegenüber der Aussenumgebung, also gegenüber Bereichen innerhalb und ausserhalb der Dachstruktur, abgedichtet ist und in welchen keine Verschmutzungen aus der Aussenumgebung eindringen können. Der abgedichtete Bereich wird also vom Luftführungselement selbst und dessen Anordnung in der Einlasskammer und an der Zirkulationsöffnung und in der Klimakammer ausgebildet.

Die untere Dachbaugruppe und/oder die obere Dachbaugruppe und/oder das Luftführungselement können aus einem Kunststoff und/oder aus einem Metall ausgebildet sein, bevorzugt aus einem Kompositematerial, besonders bevorzugt aus einem duroplastischen bzw. wärmeaushärtenden Kompositematerial.

Das Luftführungselement kann aber auch aus einem Schaum aus Kunststoff sein. Der Schaum kann ein Schaum aus Kunststoff sein, bevorzugt expandierter Kunststoff, besonders bevorzugt expandiertes Polypropylen (EPP) oder expandiertes Polyethylen (EPE) oder expandiertes Polystyrol (EPS) oder expandiertes Polyethylenterephthalat (PET) oder ein expandiertes Biopolymer oder Polyurethanschaum (PUR) sein. Im Weiteren können die untere Dachbaugruppe und/oder die obere Dachbaugruppe und/oder das Luftführungselement ein Formteil und/oder ein rotationsgeformtes Teil und/oder ein blasgeformtes Teil aufweisen, oder aber ein Formteil und/oder ein rotationsgeformtes Teil und/oder ein blasgeformtes Teil sein. Ebenso können die untere Dachbaugruppe und/oder die obere Dachbaugruppe und/oder das Luftführungselement mittels eines Formpress- und/oder Rotoformverfahrens, beispielsweise Rotationssinterverfahren oder Rotationsschmelzverfahren oder Rotationsguss, und/oder Spritzblasformen, Doppelschicht Thermoformen oder 3D Druck hergestellt sein. Das Luftführungselement kann einstückig, also ein einteilige Bauteil sein, oder auch zweistückig, also ein zweiteilige Bauteil, oder ein mehrstückiges, also ein mehrteiliges Bauteil sein. Das zweistückige oder mehrstückige Luftführungselement kann miteinander verbunden, beispielsweise verschweisst oder verklebt oder mit einem Befestigungselement aneinander befestigt werden. An oder in der Auslasskammer kann eine Belüftungsöffnung für klimatisierte Luft angeordnet sein. Dabei kann die Belüftungsöffnung einen Luftschlitz oder ein Luftgitter aufweisen, mit welchem die Menge und die Richtung einer Luftströmung in die Kabine genaue und/oder bedarfsgerecht eingestellt werden kann.

Die obere Dachbaugruppe kann das gleiche periphere Profil wie die untere Dachbaugruppe umfassen, sodass die obere Dachbaugruppe komplementär an die untere Dachbaugruppe angepasst bzw. ausgeformt werden kann, um die Einlasskammer, Auslasskammer und Klimakammer zu umschließen und/oder abzudecken. Insbesondere können die Einlasskammer, die Auslasskammer und die Klimakammer als voneinander räumlich getrennte Kammern zwischen der unteren und oberen Dachbaugruppe ausgebildet sein. Das Luftführungselement wiederum kann einen abgedichteten Bereich zumindest in der Einlasskammer und/oder teilweise oder vollständig an bzw. in der Klimakammer ausbilden. Darüber hinaus kann die obere Dachbaugruppe entfernbare Zugangsverkleidung umfassen, beispielsweise in Form eines Blechs ausgebildet, um eine Wartung bzw. Instandsetzung der Komponenten der Klimaeinrichtung zu ermöglichen. Ausserdem kann eine Abdeckung an der Auslasskammer befestigbar sein, wodurch eine Isolierung der Auslasskammer gegenüber der oberen Dachbaugruppe erreicht wird. Die Dachstruktur kann auch eine weitere Einlasskammern und/oder eine weitere Auslasskammern umfassen, insbesondere eine erste und zweite Einlasskammer und/oder eine erste und zweite Auslasskammer. Die erste und zweite Einlasskammer sowie die erste und zweite Auslasskammer können diametral oder spiegelsymmetrisch zur Klimakammer angeordnet sein.

Unter Umständen kann es erforderlich sein in der Dachstruktur ein Dichtmittel oder ein Isolationsmaterial zwischen den oberen und unteren Dachbaugruppen vorzusehen. Die obere und untere Dachbaugruppe können ausserdem mit Befestigungsmitteln oder mit Klebemitteln aneinander befestigt sein. Zusätzlich kann an den äusseren Verbindungsstellen der unteren und oberen Dachbaugruppe eine Dichtung, insbesondere ein Dichtmittel oder Kitt, verwendet werden, um die zusammengesetzte Dachstruktur wasserdicht auszugestalten. Eine Schaumstoffdichtung bzw. -isolierung kann zum Abdichten zwischen den Dachbaugruppen und/oder zum Abdichten der optionalen Abdeckungen vorgesehen sein. Ebenso kann eine Schaumstoffdichtung in der Dachstruktur vorgesehen sein, um Luftbewegungen in Bereichen zu verhindern, in welchen Luft zu Isolationszwecken vorgesehen ist.

Wesentlich für die Erfindung ist, dass aufgrund der Anordnung des Luftführungselements in der Dachstruktur und mittels des Luftführungselements selbst, in der Dachstruktur ein gegenüber der Aussenumgebung abgedichteter Bereich ausgebildet ist. In den abgedichteten Bereich gelangen keine Verschmutzungen aus der Aussenumgebung, insbesondere keine Verschmutzungen aus der Umgebungsluft. Aufgrund des abgedichteten Bereichs wird die über die Zirkulationsöffnung aus der Kabine zugeführte rezirkulierter Luft frei von Verschmutzungen aus der Aussenumgebung gehalten. Somit kann verhindert werden, dass Verschmutzungen an den äusseren Verbindungsstellen der unteren und oberen Dachbaugruppe, insbesondere wenn das Dichtmittel eine Leckage aufweist, in die Dachstruktur bzw. das Luftführungselement und in den Luftkreislauf, also den luftführenden Bereich, eindringen und somit über die Klimakammer und/oder Auslasskammer in die Kabine gelangen. Auf diese Weise wird gewährleistet, dass der Fahrer im Inneren der Kabine nicht direkt schädlichen Verschmutzungen ausgesetzt ist und die Gesundheit des Fahrers durch das Einatmen ungefilterter und mit schädlichen Verschmutzungen behafteter Umgebungsluft nicht gefährdet wird. Darüber hinaus wird aufgrund der einfachen konstruktiven Anordnung des Luftführungselements in der Dachstruktur und der einfachen Ausgestaltung der Dachstruktur weiterhin ein einfacher Zugang zu den in der Dachstruktur angeordneten und/oder anordenbaren Einrichtungen und Bauteilen gewährleistet. Somit können Wartungsarbeiten an der Dachstruktur auf einfache Art und Weise durchgeführt werden, und gleichzeitig die Kategorie 4 Anforderungen der EN 15695 erfüllt werden.

Gemäß der Erfindung ist an, insbesondere in, der Einlasskammer und/oder an, insbesondere in, der Klimakammer eine Frischluftöffnung zur Zufuhr von Frischluft ausgebildet. Das Luftführungselement ist derart an der Frischluftöffnung und an der Zirkulationsöffnung und in, der Klimakammer angeordnet, dass ein gegenüber einer Außenumgebung abgedichteter Bereich ausgebildet ist. Die Einlasskammer kann also die Frischluftöffnung und die Zirkulationsöffnung umfassen, bevorzugt können die Frischluftöffnung und die Zirkulationsöffnung in der unteren Dachbaugruppe an oder in der Einlasskammer ausgebildet sein. Ebenso kann aber auch die Einlasskammer die Zirkulationsöffnung und die Klimakammer die Frischluftöffnung umfassen, bevorzugt kann die Zirkulationsöffnung in der unteren Dachbaugruppe an oder in der Einlasskammer und die Frischluftöffnung in der unteren Dachbaugruppe an oder in der Klimakammer ausgebildet sein. Die weitere Einlasskammer kann eine weitere Frischluftöffnung zur Zufuhr von Frischluft und eine weitere Zirkulationsöffnung zur Zufuhr von rezirkulierter Luft umfassen. Ebenso kann die Klimakammer eine weitere Frischluftöffnung zur Zufuhr von Frischluft umfassen. Die Zirkulationsöffnung kann benachbart und/oder gegenüber der Frischluftöffnung angeordnet sein. Der abgedichtete Bereich wird also vom Luftführungselement selbst und dessen Anordnung in der Einlasskammer, an der Frischluftöffnung und der Zirkulationsöffnung und an, insbesondere in, der Klimakammer ausgebildet. Aufgrund des abgedichteten Bereichs wird die über die Frischluftöffnung zugeführte Frischluft und die über die Zirkulationsöffnung aus der Kabine zugeführte rezirkulierter Luft frei von Verschmutzungen aus der Aussenumgebung gehalten. Somit kann vorteilhafterweise verhindert werden, dass Verschmutzungen in die Dachstruktur eindringen und in den Luftkreislauf und somit über die Klimakammer und/oder Auslasskammer in die Kabine gelangen.

Gemäß der Erfindung weist das Luftführungselement einen Frischlufteinlass zur Zufuhr von Frischluft und einen Zirkulationseinlass zur Zufuhr von rezirkulierter Luft und einen Luftauslass zum Auslassen eines Gemischs aus Frischluft und rezirkulierter Luft auf. Dabei ist die Frischluftöffnung mit dem Frischlufteinlass und die Zirkulationsöffnung mit dem Zirkulationseinlass derart verbunden und der Luftauslass ist derart an der Klimakammer angeordnet, dass die Frischluft und die rezirkulierte Luft im Luftführungselement mischbar und das Gemisch aus Frischluft und rezirkulierter Luft im abgedichteten Bereich von der Frischluftöffnung und der Zirkulationsöffnung zum Luftauslass, insbesondere auch vom Luftauslass in die Klimakammer, führbar sind. Die Frischluftöffnung kann mit dem Frischlufteinlass und die Zirkulationsöffnung kann mit dem Zirkulationseinlass und diese beiden wiederum können mit dem Luftauslass und mit der Klimakammer kommunizierend in Verbindung stehen, also strömungsverbunden sein. Somit kann die Frischluft dem Luftführungselement über die Frischluftöffnung und den Frischlufteinlass und die rezirkulierte Luft über die Zirkulationsöffnung und den Zirkulationseinlass zugeführt werden. Im Luftführungselement sind die Frischluft und die rezirkulierte Luft mischbar und mittels des Luftauslasses der Klimakammer zuführbar. Der Luftauslass kann dabei an oder in der Klimakammer angeordnet sein. Das Luftführungselement kann einen, zwei oder mehrere Frischlufteinlässe und einen, zwei oder mehrere Zirkulationseinlässe aufweisen, insbesondere wenn die Dachstruktur zwei oder mehrere Einlasskammern mit je einer Frischluftöffnungen und einer Zirkulationsöffnungen umfasst. Ebenso kann die Dachstruktur zwei oder mehrere Luftauslässe umfassen, bevorzugt umfasst die Dachstruktur die gleiche Anzahl an Einlasskammern und Auslasskammern. Die zwei oder mehrere Einlasskammern und Auslasskammern können bevorzugt als voneinander räumlich getrennte Kammern zwischen der unteren und oberen Dachbaugruppe ausgebildet sein. Das Luftführungselement kann einen, zwei oder mehrere Frischlufteinlässe und/oder einen, zwei oder mehrere Zirkulationseinlässe aufweisen. Ebenso kann die Dachstruktur zwei oder mehrere Luftauslässe umfassen. Dabei können jeweils eine Frischluftöffnung mit einem Frischlufteinlass und jeweils eine Zirkulationsöffnung mit einem Zirkulationseinlass verbunden sein. Die Frischluftöffnungen und die Zirkulationsöffnungen können dabei über die Frischlufteinlässe und die Zirkulationseinlässen kommunizierend mit dem einen oder mehreren Luftauslässen in Verbindung stehen, also strömungsverbunden sein. Die Frischluftöffnung kann mit dem Frischlufteinlass und die Zirkulationsöffnung kann mit dem Zirkulationseinlass fest oder lösbar verbunden und/oder diese aneinander befestigt sein und/oder die Verbindungsstellen können abgedichtet sein.

Vorteilhafterweise kann somit verhindert werden, dass der Fahrer im Inneren der Kabine schädlichen Verschmutzungen direkt ausgesetzt ist und die Gesundheit des Fahrers durch das Einatmen ungefilterter und mit schädlichen Verschmutzungen behafteter Umgebungsluft nicht gefährdet wird.

In Ausgestaltung der Erfindung ist an der Frischluftöffnung und/oder am Frischlufteinlass eine Filteranordnung, insbesondere mit einem ersten Filterelement, angeordnet. Die Filteranordnung kann fest oder lösbar mit dem Frischlufteinlass oder der Frischluftöffnung verbunden bzw. gekoppelt sein oder aber an diesen befestigt sein. Die Filteranordnung kann eine Leitung und/oder ein erstes Filterelement und/oder eine Halterung mit einem Befestigungselement, um die Filteranordnung, insbesondere das erste Filterelement, zu halten und/oder zu befestigen, und/oder ein erstes Gebläse umfassen. Das erste Gebläse kann einen ersten Gebläseeinlass und einen ersten Gebläseauslass aufweisen. Der erste Gebläseeinlass kann Frischluft aus dem ersten Filterelement ansaugen und/oder der erste Gebläseauslass kann Luft in die Auslasskammer ausstossen. Das erste Filterelement kann zumindest einen Filter umfassen. In einem ersten Beispiel kann die Filteranordnung nur das erste Filterelement umfassen. In diesem Fall kann das erste Filterelement am Frischlufteinlass und/oder der Frischluftöffnung angeordnet sein, bevorzugt mit diesen verbunden bzw. gekoppelt oder an diesen befestigt sein. Die untere Dachbaugruppe kann dann einen ausgeformten Frischluftkanal umfassen, der vorzugsweise in der äußeren Peripherie der unteren Dachbaugruppe angeordnet sein, also der Fläche, die in Richtung der Kabine ausgerichtet ist. Der Frischluftkanal kann von einer entfernbaren Staubfangvorrichtung und/oder einem Einlassgitter umgeben bzw. abgedeckt sein. Die Frischluftöffnung kann ebenfalls an oder entlang der äußeren Peripherie der unteren Dachbaugruppe angeordnet sein, insbesondere auch vom Frischluftkanal umgeben sein. Das erste Filterelement kann entnehmbar an den Frischluftkanal angepasst sein. Somit kann Frischluft durch das Einlassgitter angesaugt werden und passiert das erste Filterelement bevor sie dem Luftführungselement zuführbar ist. In einem zweiten Beispiel kann die Filteranordnung zumindest die Leitung und das erste Filterelement und eine Halterung mit einem Befestigungselement und optional das erste Gebläse umfassen. In diesem Fall kann die Leitung lösbar mit dem Frischlufteinlass und/oder der Frischluftöffnung verbunden bzw. gekoppelt sein. Ausserdem kann das erste Filterelement ausserhalb der Dachstruktur, beispielsweise an einer Kabine angeordnet, insbesondere mittels des Halteelements an der Kabine fest oder lösbar befestigt oder mit dieser fest oder lösbar verbunden sein. Auf diese Weise wird gewähreistet, dass das erste Filterelement, insbesondere in den beiden Fällen, einfach gewechselt werden kann und unnötiger Wartungsaufwand vermieden wird. Vorteilhafterweise kann dadurch, insbesondere im zweiten Fall, die Frontfläche des ersten Filterelements und dadurch die Luftströmung in die Dachstruktur bzw. der Druck in der Kabine erhöht werden. Darüber hinaus können so vorteilhafterweise die Kategorie 4 Anforderungen mit nur einem Druckregler erfüllt werden. Ausserdem ist der Motor des Gebläses selbstkühlend und es kann auf weitere Gebläse, insbesondere in der Dachstruktur verzichtet werden, was den Geräuschpegel und die konstruktive Komplexität reduziert.

In Ausgestaltung der Erfindung ist an der Zirkulationsöffnung und/oder am Zirkulationseinlass ein zweites Filterelement entfernbar angeordnet. Das zweite Filterelement kann zumindest einen Filter umfassen. Auf diese Weise wird gewähreistet, dass das zweite Filterelement einfach gewechselt werden kann und unnötiger Wartungsaufwand vermieden wird.

In Ausgestaltung der Erfindung sind entweder die Filteranordnung, insbesondere die Leitung, und das Luftführungselement, insbesondere der Frischlufteinlass, oder die Filteranordnung, insbesondere die Leitung, und die Dachstruktur, insbesondere die Frischluftöffnung, mittels eines Kopplungselements verbunden. Die Filteranordnung kann also mittels des Kopplungselements fest oder lösbar mit dem Frischlufteinlass oder der Dachstruktur bzw. Frischluftöffnung verbunden oder an diesen befestigt sein. Das Kopplungselements ermöglicht es vorteilhafterweise, dass die Frischluft gleichmäßig in die Dachstruktur eingeführt werden kann. Dadurch kann die Rezirkulationszone, also der Bereich im Luftführungselement, in dem Frischluft und rezirkulierte Luft gemischt werden, auf ein Minimum reduziert werden, sodass der Druck in der Kabine vergrössert wird.

In Ausgestaltung der Erfindung umfasst das Luftführungselement einen Kabelkanal. Vorteilhafterweise sind im Kabelkanal eine oder mehrere Verbindungsleitungen, insbesondere Leitungen für die Heizung oder den Wärmetauscher, also Elektro- und/oder Klimaleitungen bzw. -rohre, am Luftführungselement anordenbar, insbesondere von und/oder zu der Klimakammer, durch die Einlasskammer hin zu einer in der unteren Dachbaugruppe ausgebildeten Apertur. Diese Massnahme verhindert, dass Verbindungsleitungen im abgedichteten Bereich verlaufen und, beispielsweise bei einer Leckage der Verbindungsleitungen, Verschmutzungen in den abgedichteten Bereich gelangen. Darüber hinaus sind die Verbindungsleitungen im Kabelkanal einfach zugänglich und können somit einfach gewartet werden.

In Ausgestaltung der Erfindung ist in der Dachstruktur in der Klimakammer und/oder in der Auslasskammer ein zweites Gebläse anordenbar oder angeordnet. Ebenso kann in der Klimakammer und/oder an der Auslasskammer eine Klimaanlagen-Baugruppe anordenbar oder angeordnet sein. Das zweite Gebläse weist dabei einen zweiten Gebläseeinlass und einen zweiten Gebläseauslass auf, wobei der zweite Gebläseeinlass Luft aus der Klimakammer ansaugt und/oder der zweite Gebläseauslass Luft in die Auslasskammer und/oder aus dem Luftführungselement ausstößt. Der Luftauslass kann an der Klimaanlagen-Baugruppe angeordnet sein. Der Luftauslass kann mit einem Klimaeinlass der Klimaanlagen-Baugruppe fest oder lösbar verbunden und/oder aneinander befestigt sein und/oder die Verbindungsstelle kann abgedichtet sein. Das zweite Gebläse kann entweder in der Klimakammer oder in der Auslasskammer, insbesondere in einer Gebläseaufnahme in der Klimakammer und/oder in der Auslasskammer angeordnet sein, welche zur Aufnahme und/oder zur Befestigung des zweiten Gebläses ausgebildet ist. Das zweite Gebläse kann auch teilweise in der Klimakammer und der Auslasskammer angeordnet sein, wobei dann die Gebläseaufnahme teilweise in der Klimakammer und der Auslasskammer angeordnet sein kann. Im Speziellen können in der Dachstruktur zwei zweite Gebläse vorgesehen und anordenbar bzw. angeordnet sein, insbesondere in jeweils einer Gebläseaufnahme anordenbar bzw. angeordnet sein. Die Klimaanlagen-Baugruppe kann derart am Luftführungselement angeordnet, insbesondere mit diesem fest oder lösbar verbunden und/oder an diesem befestigt sein, dass das Gemisch aus Frischluft und rezirkulierter Luft aus dem Luftführungselement in die Klimaanlagen-Baugruppe und aus der Klimaanlagen-Baugruppe in die Klimakammer oder Auslasskammer geführt werden kann und/oder strömen kann. Die Klimaanlagen-Baugruppe kann einen Wärmetauscher umfassen, insbesondere einen Verdampfer und/oder eine Heizungsbaugruppe und/oder eine Heizung umfassen, insbesondere Heizungs- und/oder Kühlelemente aufweisen, um sowohl eine Heizfunktion, als auch eine Kühlfunktion zur Verfügung zu stellen. Die Klimaanlagen-Baugruppe kann insbesondere an oder in der Klimakammer, welche zur Aufnahme und/oder zur Befestigung der Klimaanlagen-Baugruppe ausgebildet ist, und/oder an der Auslasskammer angeordnet sein. Vorteilhafterweise kann so ein Druckgradient in der Dachstruktur, insbesondere im Luftführungselement und/oder in der Klimakammer und/oder der Auslasskammer erzeugt werden. Darüber hinaus kann vorteilhafterweise das Gemisch aus Frischluft und rezirkulierter Luft aus dem abgedichteten Bereich direkt an die Klimaanlagen-Baugruppe geführt werden, insbesondere direkt an den Verdampfer und/oder die Heizung.

Die Erfindung betrifft ausserdem eine Kabine für ein landwirtschaftliches Fahrzeug, umfassend eine Dachstruktur, nach mindestens einem der Ansprüche 1 bis 9. Die erfindungsgemässe Kabine weist die oben beschriebenen Vorteile der erfindungsgemässen Dachstruktur auf.

In Ausgestaltung der Erfindung umfasst die Kabine mindestens eine Seitenwand und die Dachstruktur mit einer Filteranordnung. Die Filteranordnung kann eine Halterung mit einem Befestigungselement umfassen, und die Halterung kann die Filteranordnung, insbesondere das erste Filterelement, halten und/oder die Filteranordnung ist mittels des Befestigungselements an der Dachstruktur und/oder der Seitenwand befestigbar oder kann befestigt sein.

Die Dachstruktur, insbesondere die zusammengesetzte Dachstruktur, kann als Dach der Kabine verwendet werden. Der Rest der Kabine kann von einem Boden und/oder einer oder mehreren Seitenwänden, im Speziellen auch einem Rahmen gebildet sein. Die Seitenwände können mit der Dachstruktur, bevorzugt mit der unteren Dachbaugruppe, besonders bevorzugt zwischen der Frischluftöffnung und der Zirkulationsöffnung, verbunden und/oder abgedichtet sein. Die Seitenwände können Metall-, Plastik- oder Glaselemente aufweisen, welche mit der Dachstruktur über herkömmliche Mittel verbunden sind.

Insgesamt kann der Verlauf der Luftströmung in der Dachstruktur wie folgt beschrieben werden. Im Luftführungselement ist ein Druckgradient, insbesondere Über- und/oder Unterdruck, der vom ersten und/oder zweiten Gebläse erzeugt wird. Die Frischluft, die über die Filteranordnung durch die Frischluftöffnung oder Frischlufteinlass gefiltert in das Luftführungselement ansaugbar ist, und die rezirkulierte Luft, die insbesondere über das zweite Filterelement, durch die Zirkulationsöffnung gefiltert aus der Kabine in das Luftführungselement ansaugbar ist, kann im Luftführungselement gemischt und im abgedichteten Bereich in die Klimakammer geführt werden. Die gemischte Luft kann anschliessend die Klimaanlagen-Baugruppe passieren, wo sie entweder erwärmt oder gekühlt wird. Die klimatisierte Luft wird dann unter einer erhöhten Geschwindigkeit in die Auslasskammer ausgestossen, von wo aus die klimatisierte Luft über die Belüftungsöffnung in die Kabine geleitet wird.

Weitere vorteilhafte Massnahmen und bevorzugte Ausführungsbeispiele ergeben sich aus den abhängigen Ansprüchen.

Im Folgenden wird die erfindungsgemäße Dachstruktur anhand von Ausführungsbeispielen unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine perspektivische Ansicht eines ersten Ausführungsbeispiel der erfindungsgemässen Dachstruktur, und
- Fig. 2: eine perspektivische Ansicht der unteren Dachbaugruppe der erfindungsgemässen Dachstruktur, und
- Fig. 3: eine schematische Darstellung des Luftführungselements der erfindungsgemässen Dachstruktur, und
- Fig. 4: eine perspektivische Ansicht des Luftführungselements der erfindungsgemässen Dachstruktur, und
- Fig. 5: eine perspektivische Darstellung eines weiteren Ausführungsbeispiels einer erfindungsgemässen Dachstruktur, und
- Fig. 6: eine perspektivische Ansicht des Kopplungselements.

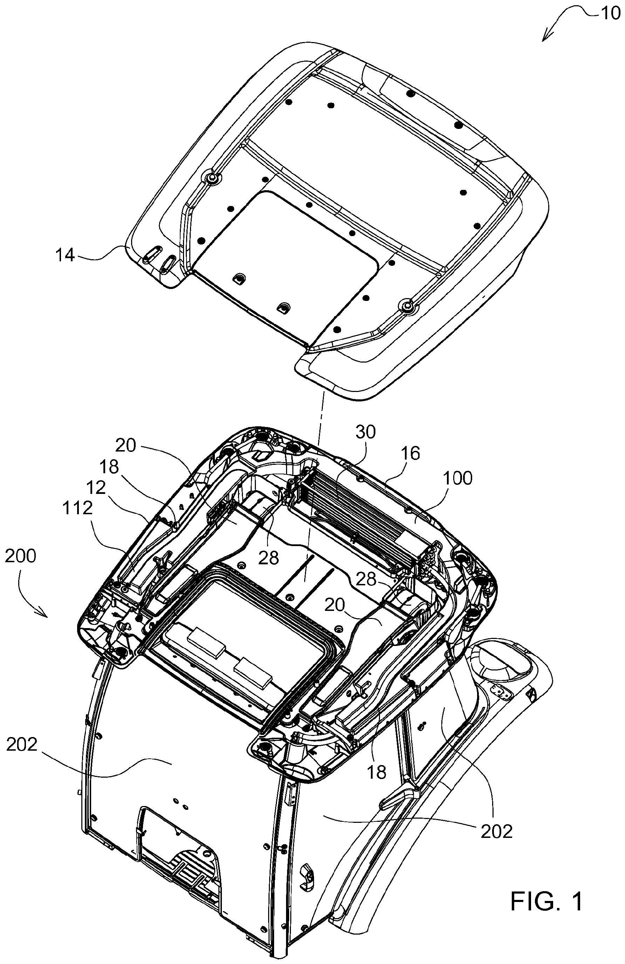

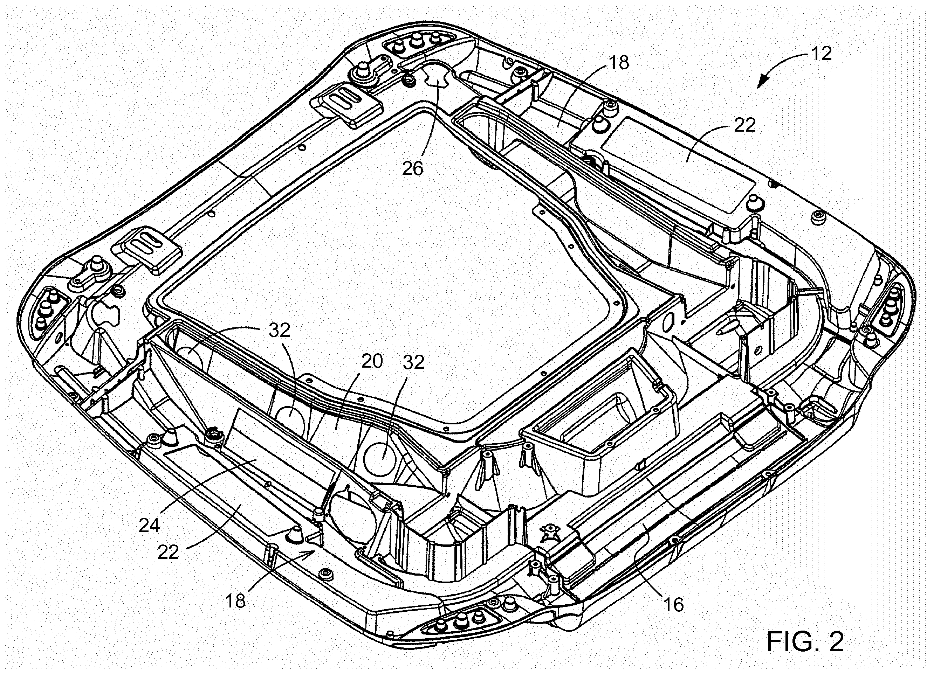

Figur 1 zeigt eine schematische Darstellung eines ersten Ausführungsbeispiels der erfindungsgemässen Dachstruktur für ein landwirtschaftliches Fahrzeug. Die Dachstruktur umfasst eine untere Dachbaugruppe 12 und eine obere Dachbaugruppe 14. In der unteren Dachbaugruppe 12 ist eine Klimakammer 16 ausgebildet, wobei die obere Dachbaugruppe 14 zum Umschliessen der Klimakammer 16 an der unteren Dachbaugruppe 12 fest oder lösbar befestigbar ist. Die Dachstruktur 10 umfasst weiter zwei Einlasskammern 18 für nicht klimatisierte Luft und zwei Auslasskammern 20 für klimatisierte Luft, wobei die Einlasskammern 18 und die Auslasskammern 20 zwischen der unteren Dachbaugruppe 12 und der oberen Dachbaugruppe 14 als voneinander getrennte Kammern ausgebildet sind. Jede Einlasskammer umfasst eine Frischluftöffnung (Bezugszeichen 22, siehe Figur 2) zur Zufuhr von Frischluft und eine Zirkulationsöffnung (Bezugszeichen 24, siehe Figur 2) zur Zufuhr von rezirkulierter Luft. Die Dachstruktur 10 umfasst ein in den Einlasskammern 18 angeordnetes Luftführungselement 100. Das Luftführungselement 100 ist dabei derart an den Frischluftöffnungen (Bezugszeichen 22, siehe Figur 2) und an den Zirkulationsöffnungen (Bezugszeichen 24, siehe Figur 2) und an der Klimakammer 16 angeordnet, dass ein gegenüber einer Außenumgebung abgedichteter Bereich ausgebildet ist. Das Luftführungselement 100 weist ausserdem einen Kabelkanal 112 auf, in welchem Verbindungsleitungen, also Kabel und/oder Schläuche, angeordnet sind.

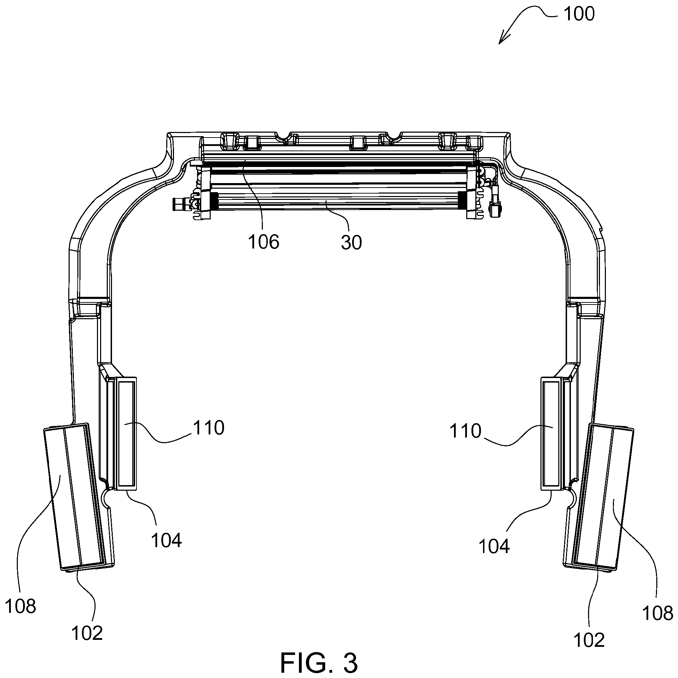

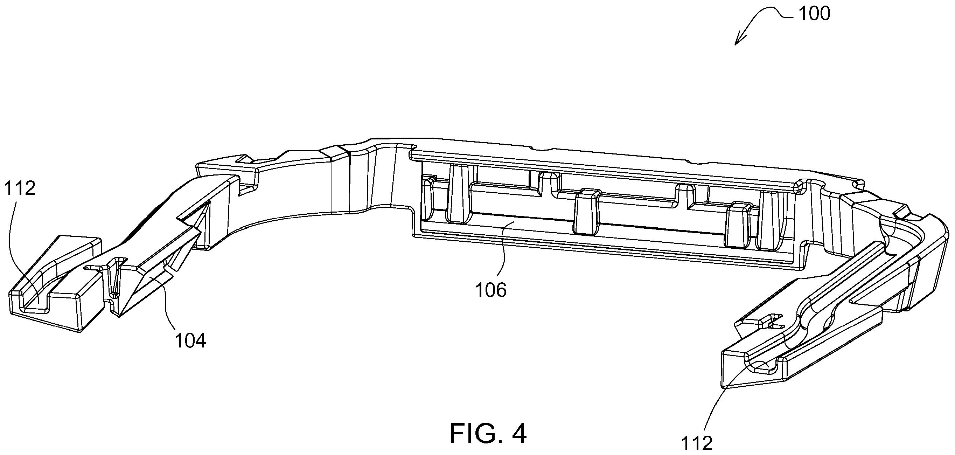

In der Klimakammer 16 sind ausserdem zwei zweite Gebläse 28 und eine Klimaanlagen-Baugruppe 30 angeordnet, wobei das zweite Gebläse 28 einen zweite Gebläseeinlass und einen zweite Gebläseauslass aufweist. Der zweite Gebläseeinlass kann im Betriebszustand Luft aus der Klimakammer 16 ansaugen und der zweite Gebläseauslass Luft in die Auslasskammer 20 ausstossen. Der Luftauslass (Bezugszeichen 106, siehe Figuren 3 und 4) des Luftführungselements 100 ist an der Klimaanlagen-Baugruppe 30 angeordnet, sodass die gefilterte Frischluft und die rezirkulierte Luft direkt auf die Oberfläche der Klimaanlagen-Baugruppe 30 führbar sind.

Fig. 1 zeigt insbesondere weiter eine schematische Darstellung eines ersten Ausführungsbeispiels der erfindungsgemässen Kabine 200 für ein landwirtschaftliches Fahrzeug umfassend eine Dachstruktur 10. Die Kabine 200 umfasst die oben beschriebenen Dachstruktur 10 und Seitenwände 202, hier vier Stück, aus Glas. Die Seitenwände 202 sind an der unteren Dachbaugruppe 12 befestigt bzw. mit dieser lösbar verbunden.

Figur 2 zeigt eine schematische Darstellung der unteren Dachbaugruppe 12 der erfindungsgemässen Dachstruktur 10. Die in Figur 2 gezeigte untere Dachbaugruppe entspricht im Wesentlichen der in Figur 1 gezeigten unteren Dachbaugruppe, sodass im Folgenden lediglich auf die Unterschiede eingegangen wird. Die untere Dachbaugruppe umfasst zwei Einlasskammern 18 mit jeweils einer Frischluftöffnung 22 und einer Zirkulationsöffnung 24. Die Frischluft und die rezirkulierte Luft sind mit dem zweite Gebläse (Bezugszeichen 28, Figur 1) ansaugbar, im Luftführungselement (Bezugszeichen 100, Figuren 1, 3 und 4) mischbar und im abgedichteten Bereich zur Klimakammer 16 führbar. Die mittels der Klima-Baugruppe klimatisierte Luft ist ausserdem von der Klimakammer aus mittels der zweiten Gebläse (Bezugszeichen 28, Figur 1) in die Auslasskammer 20 und über die Belüftungsöffnungen 32 in die Kabine führbar. Figur 3 zeigt eine schematische Darstellung des Luftführungselements 100 der erfindungsgemässen Dachstruktur 10. Das in Figur 3 gezeigte Luftführungselement 100 entspricht im Wesentlichen dem in Figur 1 gezeigten Luftführungselement 100, weshalb im Folgenden lediglich auf die Unterschiede eingegangen wird. Das Luftführungselement 100 weist zwei Frischlufteinlässe 102 und zwei Zirkulationseinlässe 104 und einen Luftauslass 106 auf. Im Einbauzustand ist die Frischluftöffnung (Bezugszeichen 22, siehe Figur 2) mit dem Frischlufteinlass 102 und die Zirkulationsöffnung (Bezugszeichen 24, siehe Figur 2) mit dem Zirkulationseinlass 104 derart verbunden und der Luftauslass 106 derart an der Klimakammer (Bezugszeichen 16, siehe Figuren 1 und 2) angeordnet, dass die Frischluft und die rezirkulierte Luft dem Luftführungselement zuführbar, im Luftführungselement 100 mischbar und im abgedichteten Bereich von der Frischluftöffnung (Bezugszeichen 22, siehe Figur 2) und der Zirkulationsöffnung (Bezugszeichen 24, siehe Figur 2) zur Klimakammer (Bezugszeichen 16, siehe Figuren 1 und 2) führbar sind. Zur Filterung der dem Luftführungselement zugeführten Frischluft und rezirkulierten Luft sind an den Frischlufteinlässen 102 je ein erstes Filterelement 108 und an den Zirkulationseinlässen 104 je ein zweites Filterelement 110 entfernbar angeordnet.

Figur 4 zeigt eine perspektivische Darstellung des in Figur 3 gezeigten Luftführungselements 100 der erfindungsgemässen Dachstruktur 10.

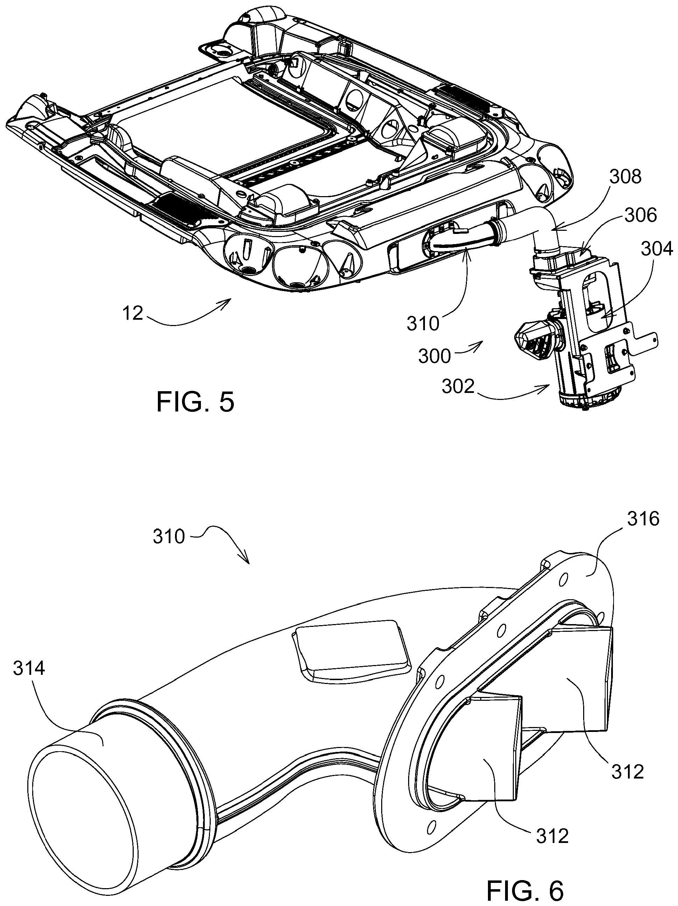

Figur 5 zeigt eine perspektivische Darstellung eines weiteren Ausführungsbeispiels einer erfindungsgemässen Dachstruktur 10, im Speziellen die untere Dachgruppe 12 mit der Filteranordnung 300. Die in Figur 5 gezeigte untere Dachbaugruppe 12 entspricht im Wesentlichen der in den Figuren 1 und 2 gezeigten unteren Dachbaugruppe 12, sodass im Folgenden lediglich auf die Unterschiede eingegangen wird. Die Filteranordnung 300 umfasst eine Leitung 308, ein erstes Filterelement 302, insbesondere mit einem Filter, eine Halterung 304 mit einem Befestigungselement, ein erstes Gebläse 306 und ein Kopplungselement 310. Die Leitung 308 ist mit dem Kopplungselement 310 verbunden, insbesondere am Kopplungselement 310 befestigt, sodass diese strömungsverbunden sind. Das Kopplungselement 310 ist mit dem Frischlufteinlass 22 der unteren Dachbaugruppe 12 lösbar verbunden bzw. an diesem befestigt, kann aber auch fest verbunden sein.

Figur 6 zeigt eine perspektivische Darstellung des Kopplungselements 310. Das in Figur 6 gezeigte Kopplungselement 310 entspricht im Wesentlichen dem in Figur 5 gezeigten Kopplungselement 310, sodass im Folgenden lediglich auf die Unterschiede eingegangen wird. Das Kopplungselement 310 ist mittels eines Befestigungselements, hier ein Kopplungsflansch 316, an der unteren Dachbaugruppe befestigbar. Die Leitung 308 ist über einen Anschlussstutzen 314 am Kopplungselement 310 anschliessbar.

## Patentansprüche

1. Dachstruktur für ein landwirtschaftliches Fahrzeug, umfassend eine obere Dachbaugruppe (14) und eine untere Dachbaugruppe (12), wobei in der unteren Dachbaugruppe (12) eine Klimakammer (16) ausgebildet ist, und die obere Dachbaugruppe (14) zum Umschliessen der Klimakammer (16) an der unteren Dachbaugruppe (12) befestigbar ist, und die Dachstruktur (10) weiter eine Einlasskammer (18) und eine Auslasskammer (20) für klimatisierte Luft umfasst, wobei die Einlasskammer (18) und die Auslasskammer (20) zwischen der unteren Dachbaugruppe (12) und der oberen Dachbaugruppe (14) als voneinander getrennte Kammern ausgebildet sind, und an der Einlasskammer (18) eine Zirkulationsöffnung (24) zur Zufuhr von rezirkulierter Luft angeordnet ist, wobei an der Einlasskammer (18) und/oder an der Klimakammer (16) eine Frischluftöffnung (22) zur Zufuhr von Frischluft ausgebildet ist
**dadurch gekennzeichnet, dass**
die Dachstruktur (10) ein in der Einlasskammer (18) und in der Klimakammer (16) angeordnetes Luftführungselement (100) umfasst, wobei das Luftführungselement (100) als ein geschlossener Kanal oder als ein röhrenförmiger Körper ausgebildet ist, und das Luftführungselement (100) derart an der Frischluftöffnung (22) und an der Zirkulationsöffnung (24) und in der Klimakammer (16) angeordnet ist, dass das Luftführungselement selbst einen gegenüber Bereichen innerhalb und ausserhalb der Dachstruktur (10) abgedichteten Bereich in der Einlasskammer (18) und in der Klimakammer (16) ausbildet.

2. Dachstruktur nach Anspruch 1, **dadurch gekennzeichnet, dass** das Luftführungselement (100) einen Frischlufteinlass (102) zur Zufuhr von Frischluft und einen Zirkulationseinlass (104) zur Zufuhr von rezirkulierter Luft und einen Luftauslass (106) zum Auslassen gemischter Luft aufweist, und die Frischluftöffnung (22) mit dem Frischlufteinlass (102) und die Zirkulationsöffnung (24) mit dem Zirkulationsauslass (104) derart verbunden sind und der Luftauslass (106) derart an der Klimakammer (16) angeordnet ist, dass die Frischluft und die rezirkulierte Luft im Luftführungselement (100) mischbar und im abgedichteten Bereich von der Frischluftöffnung (22) und der Zirkulationsöffnung (24) zum Luftauslass (106) führbar sind.

3. Dachstruktur nach mindestens einem der vorangehenden Ansprüche, **dadurch gekennzeichnet, dass** an der Frischluftöffnung (22) und/oder am Frischlufteinlass (102) eine Filteranordnung (300), insbesondere mit einem ersten Filterelement (108), angeordnet ist.

4. Dachstruktur nach mindestens einem der vorangehenden Ansprüche, **dadurch gekennzeichnet, dass** an der Zirkulationsöffnung (24) und/oder am Zirkulationseinlass (104) ein zweites Filterelement (110) entfernbar angeordnet ist.

5. Dachstruktur nach mindestens einem der vorangehenden Ansprüche, **dadurch gekennzeichnet, dass** die Filteranordnung (300) und das Luftführungselement (100) oder die Filteranordnung (300) und die Dachstruktur (10) mittels eines Kopplungselements (310) verbunden sind.

6. Dachstruktur nach mindestens einem der vorangehenden Ansprüche, **dadurch gekennzeichnet, dass** das Luftführungselement (100) einen Kabelkanal (112) umfasst.

7. Dachstruktur nach mindestens einem der vorangehenden Ansprüche, **dadurch gekennzeichnet, dass** in der Klimakammer (16) und/oder in der Auslasskammer (20) ein zweites Gebläse (28) anordenbar ist und/oder in der Klimakammer (16) und/oder an der Auslasskammer (20) eine Klimaanlagen-Baugruppe (30) anordenbar ist.

8. Dachstruktur nach Anspruch 7, **dadurch gekennzeichnet, dass** das zweite Gebläse (28) einen Gebläseeinlass und einen Gebläseauslass aufweist, wobei der Gebläseeinlass Luft aus der Klimakammer (16) ansaugt und/oder der Gebläseauslass Luft in die Auslasskammer (20) ausstößt.

9. Dachstruktur nach Anspruch 7 oder 8, **dadurch gekennzeichnet, dass** der Luftauslass (106) an der Klimaanlagen-Baugruppe (30) angeordnet ist.

10. Kabine für ein landwirtschaftliches Fahrzeug, umfassend eine Dachstruktur nach mindestens einem der Ansprüche 1 bis 9.

11. Kabine nach Anspruch 10, **dadurch gekennzeichnet, dass** die Kabine (200) mindestens eine Seitenwand (202) und die Dachstruktur (10) mit einer Filteranordnung (300) umfasst.

## Claims

1. Roof structure for an agricultural vehicle, comprising
an upper roof assembly (14) and a lower roof assembly (12), wherein an air-conditioning chamber (16) is formed in the lower roof assembly (12), and the upper roof assembly (14) is able to be fastened to the lower roof assembly (12) in order to surround the air-conditioning chamber (16), and the roof structure (10) furthermore comprises an inlet chamber (18) and an outlet chamber (20) for air-conditioned air, wherein the inlet chamber (18) and the outlet chamber (20) are configured, between the lower roof assembly (12) and the upper roof assembly (14), as chambers that are separated from one another, and a circulation opening (24) for supplying recirculated air is arranged at the inlet chamber (18), wherein a fresh-air opening (22) for supplying fresh air is formed at the inlet chamber (18) and/or at the air-conditioning chamber (16),
**characterized in that**
the roof structure (10) comprises an air-guiding element (100) arranged in the inlet chamber (18) and in the air-conditioning chamber (16), wherein the air-guiding element (100) is configured as a closed duct or as a tubular body, and the air-guiding element (100) is arranged at the fresh-air opening (22) and at the circulation opening (24) and in the air-conditioning chamber (16) such that the air-guiding element itself forms a region in the inlet chamber (18) and in the air-conditioning chamber (16) that is sealed off from regions inside and outside the roof structure (10).

2. Roof structure according to Claim 1, **characterized in that** the air-guiding element (100) has a fresh-air inlet (102) for supplying fresh air and a circulation inlet (104) for supplying recirculated air and an air outlet (106) for letting out mixed air, and the fresh-air opening (22) is connected to the fresh-air inlet (102) and the circulation opening (24) is connected to the circulation outlet (104), and the air outlet (106) is arranged at the air-conditioning chamber (16), such that the fresh air and the recirculated air are able to be mixed in the air-guiding element (100) and are able to be guided in the sealed-off region from the fresh-air opening (22) and the circulation opening (24) to the air outlet (106).

3. Roof structure according to at least one of the preceding claims, **characterized in that** a filter arrangement (300), in particular having a first filter element (108), is arranged at the fresh-air opening (22) and/or at the fresh-air inlet (102).

4. Roof structure according to at least one of the preceding claims, **characterized in that** a second filter element (110) is arranged in a removable manner at the circulation opening (24) and/or at the circulation inlet (104).

5. Roof structure according to at least one of the preceding claims, **characterized in that** the filter arrangement (300) and the air-guiding element (100) or the filter arrangement (300) and the roof structure (10) are connected by means of a coupling element (310).

6. Roof structure according to at least one of the preceding claims, **characterized in that** the air-guiding element (100) comprises a cable duct (112).

7. Roof structure according to at least one of the preceding claims, **characterized in that** a second fan (28) is arrangeable in the air-conditioning chamber (16) and/or in the outlet chamber (20), and/or an air-conditioning system assembly (30) is arrangeable in the air-conditioning chamber (16) and/or at the outlet chamber (20).

8. Roof structure according to Claim 7, **characterized in that** the second fan (28) has a fan inlet and a fan outlet, wherein the fan inlet sucks up air from the air-conditioning chamber (16) and/or the fan outlet discharges air into the outlet chamber (20).

9. Roof structure according to Claim 7 or 8, **characterized in that** the air outlet (106) is arranged at the air-conditioning system assembly (30) .

10. Cab for an agricultural vehicle, comprising a roof structure according to at least one of Claims 1 to 9.

11. Cab according to Claim 10, **characterized in that** the cab (200) comprises at least one side wall (202) and the roof structure (10) having a filter arrangement (300) .

## Revendications

1. Structure de toit pour un véhicule agricole, comportant un ensemble de toit supérieur (14) et un ensemble de toit inférieur (12), une chambre climatisée (16) étant réalisée dans l'ensemble de toit inférieur (12), et l'ensemble de toit supérieur (14) pouvant être fixé à l'ensemble de toit inférieur (12) pour entourer la chambre climatisée (16), et la structure de toit (10) comportant en outre une chambre d'entrée (18) et une chambre de sortie (20) pour de l'air climatisé, la chambre d'entrée (18) et la chambre de sortie (20) étant réalisées entre l'ensemble de toit inférieur (12) et l'ensemble de toit supérieur (14) sous forme de chambres séparées l'une de l'autre, et une ouverture de circulation (24) servant à l'amenée d'air recirculé étant agencée au niveau de la chambre d'entrée (18), une ouverture d'air frais (22) servant à l'amenée d'air frais étant réalisée au niveau de la chambre d'entrée (18) et/ou au niveau de la chambre climatisée (16),
**caractérisée en ce que**
la structure de toit (10) comporte un élément de guidage d'air (100) agencé dans la chambre d'entrée (18) et dans la chambre climatisée (16), l'élément de guidage d'air (100) étant réalisé sous la forme d'un canal fermé ou sous la forme d'un corps tubulaire, et l'élément de guidage d'air (100) étant agencé au niveau de l'ouverture d'air frais (22) et au niveau de l'ouverture de circulation (24) et dans la chambre climatisée (16), de telle sorte que l'élément de guidage d'air lui-même forme une région dans la chambre d'entrée (18) et dans la chambre climatisée (16), laquelle région est étanchéifiée par rapport à des régions à l'intérieur et à l'extérieur de la structure de toit (10).

2. Structure de toit selon la revendication 1, **caractérisée en ce que** l'élément de guidage d'air (100) comprend une entrée d'air frais (102) pour l'amenée d'air frais et une entrée de circulation (104) pour l'amenée d'air recirculé et une sortie d'air (106) servant à l'évacuation d'air mélangé, et l'ouverture d'air frais (22) est reliée à l'entrée d'air frais (102) et l'ouverture de circulation (24) est reliée à la sortie de circulation (104) et la sortie d'air (106) est agencée au niveau de la chambre climatisée (16), de telle sorte que l'air frais et l'air recirculé peuvent être mélangés dans l'élément de guidage d'air (100) et peuvent être guidés dans la région étanchéifiée à partir de l'ouverture d'air frais (22) et de l'ouverture de circulation (24) jusqu'à la sortie d'air (106).

3. Structure de toit selon au moins l'une des revendications précédentes, **caractérisée en ce qu'**un agencement filtrant (300), en particulier comportant un premier élément filtrant (108), est agencé au niveau de l'ouverture d'air frais (22) et/ou au niveau de l'entrée d'air frais (102).

4. Structure de toit selon au moins l'une des revendications précédentes, **caractérisée en ce qu'**un deuxième élément filtrant (110) est agencé de manière amovible au niveau de l'ouverture de circulation (24) et/ou au niveau de l'entrée de circulation (104).

5. Structure de toit selon au moins l'une des revendications précédentes, **caractérisée en ce que** l'agencement filtrant (300) et l'élément de guidage d'air (100) ou l'agencement filtrant (300) et la structure de toit (10) sont reliés au moyen d'un élément d'accouplement (310).

6. Structure de toit selon au moins l'une des revendications précédentes, **caractérisée en ce que** l'élément de guidage d'air (100) comporte un passage de câbles (112).

7. Structure de toit selon au moins l'une des revendications précédentes, **caractérisée en ce qu'**un deuxième ventilateur (28) peut être agencé dans la chambre climatisée (16) et/ou dans la chambre de sortie (20) et/ou **en ce qu'**un ensemble de système de climatisation (30) peut être agencé dans la chambre climatisée (16) et/ou au niveau de la chambre de sortie (20) .

8. Structure de toit selon la revendication 7, **caractérisée en ce que** le deuxième ventilateur (28) comprend une entrée de ventilateur et une sortie de ventilateur, l'entrée de ventilateur aspirant de l'air hors de la chambre climatisée (16) et/ou la sortie de ventilateur évacuant de l'air dans la chambre de sortie (20) .

9. Structure de toit selon la revendication 7 ou 8, **caractérisée en ce que** la sortie d'air (106) est agencée au niveau de l'ensemble de système de climatisation (30).

10. Cabine pour un véhicule agricole, comportant une structure de toit selon au moins l'une des revendications 1 à 9.

11. Cabine selon la revendication 10, **caractérisée en ce que** la cabine (200) comporte au moins une paroi latérale (202) et la structure de toit (10) comportant un agencement filtrant (300).
